# EUROPÄISCHE PATENTANMELDUNG

(11) **EP 0 960 790 A1**
(43) Veröffentlichungstag der Anmeldung: **01.12.1999**
(21) Anmeldenummer: 98122858.8
(22) Anmeldetag: 02.12.1998
(51) Int. Cl.: B60R 22/20

(54) **Höhenverstellbarer Umlenkbeschlag für Sicherheitsgurte**

(30) Priorität: 28.05.1998 DE 19823799
(71) Anmelder: R. SCHMIDT GMBH, 57368 Lennestadt (DE)
(72) Erfinder: Lohmann, Horst, 59846 Sundern (DE); Stenzel, Wolfgang, 59889 Cobbenrode (DE); Rau, Dirk, 57413 Finnentrop (DE)
(74) Vertreter: Patentanwälte Dipl.-Ing. Conrad Köchling Dipl.-Ing. Conrad-Joachim Köchling

(57) **Zusammenfassung**

Um einen höhenverstellbaren Umlenkbeschlag für Sicherheitsgurte, bestehend aus einer Führungsschiene, einem an der Schiene rastend verstellbar gehalterten Verstellteil, welches mittels Federkraft in die Rastposition gedrängt ist, wobei an dem Verstellteil vorderseitig der Führungsschiene eine Umlenköse des Umlenkbeschlages angeordnet ist, die gemeinsam mit dem Verstellteil entgegen Federkraft verstellbar ist, so daß das Verstellteil in eine entrastete Verschiebeposition verstellt ist, zu schaffen, bei dem die Gefahr des Ausrastens bei auftretendem Seitenaufprall auf das Fahrzeug beseitigt ist, wird vorgeschlagen, daß die Umlenköse (5) derart mit dem Verstellteil (2) gekoppelt ist, daß es in der Normalgebrauchslage der Umlenköse (5) nicht durch Druckausübung auf die Umlenköse (5) normal zur Führungsschiene (1) entgegen Federkraft verstellbar und somit das Verstellteil (2) nicht entrastbar ist und daß es nur bei entgegen der Fahrtrichtung (9) des damit ausgestatteten Fahrzeugs gegenüber dem Verstellteil (2) gedrehter Lage der Umlenköse (5) entgegen Federkraft durch Druckausübung auf die Umlenköse (5) verstellbar ist und das Verstellteil (2) in die entrastete Verschiebeposition überführbar ist.

## Beschreibung

Die Erfindung betrifft einen höhenverstellbaren Umlenkbeschlag für Sicherheitsgurte, bestehend aus einer Führungsschiene, einem an der Schiene rastend verstellbar gehalterten Verstellteil, welches mittels Federkraft in die Rastposition gedrängt ist, wobei an dem Verstellteil vorderseitig der Führungsschiene eine Umlenköse des Umlenkbeschlages angeordnet ist, die gemeinsam mit dem Verstellteil entgegen Federkraft verstellbar ist, so daß das Verstellteil in eine entrastete Verschiebeposition verstellt ist.

Ein derartiger Umlenkbeschlag ist beispielsweise aus der DE 36 18 973 A1 bekannt. Solche Umlenkbeschläge werden innerhalb eines Fahrzeuges, insbesondere eines Kraftfahrzeuges angeordnet, vorzugsweise an den B- oder C-Säulen des damit auszustattenden Fahrzeuges.

Zur Höhenverstellung ist das Verstellteil relativ zu der Führungsschiene rastend und stufenweise verstellbar, so daß je nach Größe des Benutzers der Gurtverlauf unterschiedlich hoch eingestellt werden kann.

Bei der bekannten Einrichtung ist es für den Benutzer erforderlich, wenn er den Umlenkbeschlag entlang der Führungsschiene höhenverstellen will, daß er die Umlenköse beziehungsweise daran fixierte Teile in Richtung auf die Schiene drückt, wodurch das Verstellteil aus der Rastposition gedrängt wird, so daß dann der Umlenkbeschlag mit dem Verstellteil entlang der Schiene verstellbar ist. Sofern der Benutzer die Umlenköse losläßt, wird das Verstellteil durch die Kraft einer zwischen den Elementen angeordneten Feder in die Rastposition gedrängt. Obwohl sich eine derartige Ausbildung in der Praxis bewährt hat, hat man festgestellt, daß bei einem Unfall, bei dem seitlich auf das damit ausgestattete Fahrzeug ein Stoß ausgeübt wird (Seitenaufprall) die Rastung des Verstellteiles ungewollt ausrasten kann, so daß eine sichere Verankerung des Gurtes nicht mehr erreicht wird.

Ausgehend von diesem Stand der Technik liegt der Erfindung die Aufgabe zugrunde, einen höhenverstellbaren Umlenkbeschlag gattungsgemäßer Art zu schaffen, bei dem die Gefahr des Ausrastens bei auftretendem Seitenaufprall auf das Fahrzeug beseitigt ist.

Zur Lösung dieser Aufgabe schlägt die Erfindung vor, daß die Umlenköse derart mit dem Verstellteil gekoppelt ist, daß es in der Normalgebrauchslage der Umlenköse nicht durch Druckausübung auf die Umlenköse normal zur Führungsschiene entgegen Federkraft verstellbar und somit das Verstellteil nicht entrastbar ist und daß es nur bei entgegen der Fahrtrichtung des damit ausgestatteten Fahrzeugs gegenüber dem Verstellteil gedrehter Lage der Umlenköse entgegen Federkraft durch Druckausübung auf die Umlenköse verstellbar ist und das Verstellteil in die entrastete Verschiebeposition überführbar ist.

Durch diese Anordnung wird erreicht, daß eine Verstellung des Verstellteiles nicht möglich ist, sofern das Verstellteil sich in der normalen Gebrauchslage befindet, also die Umlenköse für einen quasi vertikalen Gurtverlauf oder einen nach vorn gerichteten Gurtverlauf relativ zum Verstellteil ausgerichtet ist. Nur dann, wenn die Umlenköse relativ zum Verstellteil entgegen der Fahrtrichtung gedreht ist, ist ein Lösen der Verrastung des Verstellteiles möglich, indem auf die Umlenköse Druckkraft ausgeübt wird und somit das Verstellteil aus der an der Führungsschiene verrasteteten Position gelöst wird. Diese Druckbewegung erfolgt gegen die Federkraft des Federelementes als Bestandteil des Umlenkbeschlages, so daß dann, wenn der Benutzer die Umlenköse losläßt, das Verstellteil durch die Federkraft wieder in die Verrastungsposition überführt wird.

Durch diese Ausbildung ist sichergestellt, daß bei einem Seitenaufprall nicht zufällig das Verstellteil entrastet werden kann.

Bevorzugt ist ferner vorgesehen, daß das Verstellteil eine einen Längsschlitz der Führungsschiene durchgreifende Führungshülse aufweist, in die ein die Umlenköse haltender Bolzen eingeschraubt ist und daß vorderseitig der Führungsschiene eine Dämpferscheibe angeordnet ist, die auf der Führungsschiene aufliegt und die einen Kragen aufweist, an dem sich in der Normalgebrauchslage eine Hülse abstützt, die mit der Umlenköse verbunden ist, während in der entgegen Fahrtrichtung gedrehten Lage der Umlenköse samt Hülse die Hülse über den Kragen schiebbar ist, so daß das Verstellteil entgegen Federkraft in die Verstellposition überführbar ist.

Durch die starre Dämpferscheibe mit dem zylindrischen, hülsenartigen Kragen ist ein gemeinsam mit dem Verstellteil verstellbares Element gebildet, welches die Bezugsebene für die Hülse der Umlenköse bildet. In der Normalgebrauchslage ist die Hülse durch den Kragen der Dämpferscheibe blockiert. Nur dann, wenn die Umlenköse samt Hülse in entgegen der Fahrtrichtung um einen bestimmten Winkelgrad gedreht wird, kann die Umlenköse mit der Hülse über den Kragen der Dämpferscheibe axial in Richtung auf die Führungsschiene verschoben werden, so daß damit gleichzeitig Kraft auf das Verstellteil ausgeübt wird, welches entgegen der Federkraft in die Verstellposition gedrängt werden kann.

Vorzugsweise ist ferner vorgesehen, daß das Verstellteil an seinen Längsenden in den Längsschlitz der Führungsschiene eingreifende Führungsvorsprünge aufweist.

Desweiteren ist in an sich bekannter Weise vorgesehen, daß seitlich neben dem Längsschlitz der Führungsschiene Rastausnehmungen über die Länge der Führungsschienen verteilt angeordnet sind, in die Rastvorsprünge des Verstellteils eingreifen.

Besonders bevorzugt ist auch, daß der hülsenartige Kragen der Dämpferscheibe und die mit der Umlenköse verbundene Hülse nach Art von axial gerichteten Nuten und Federn ausgebildet Elemente aufweisen, derart, daß das Ende des Kragens an der Mündung der Hülse in der Gebrauchslage abgestützt ist, während in entgegen der Fahrtrichtung um ca. 30° gedrehter Lage der Hülse die Hülse auf den Kragen aufschiebbar ist.

Ein Ausführungsbeispiel ist in der Zeichnung dargestellt und im folgenden näher beschrieben. Es zeigt:
Figur 1 einen Umlenkbeschlag in Gebrauchslage und in Entriegelungsposition (strichpunktiert gezeichnet);
Figur 2 den Umlenkbeschlag gemäß Figur 1 im Schnitt II/II der Figur 1 gesehen;
Figur 3 eine Einzelheit der Figur 2 in gleicher Ansicht;

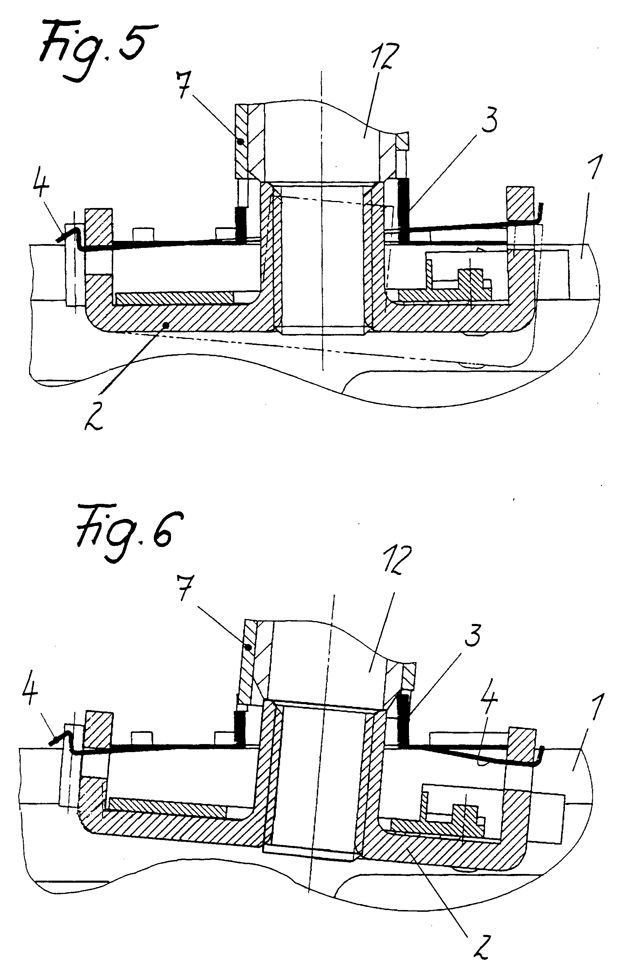

Figur 4 eine Einzelheit in Draufsicht;
Figur 5 eine Einzelheit im Schnitt V/V der Figur 1 gesehen;
Figur 6 desgleichen in der Entriegelungsposition.

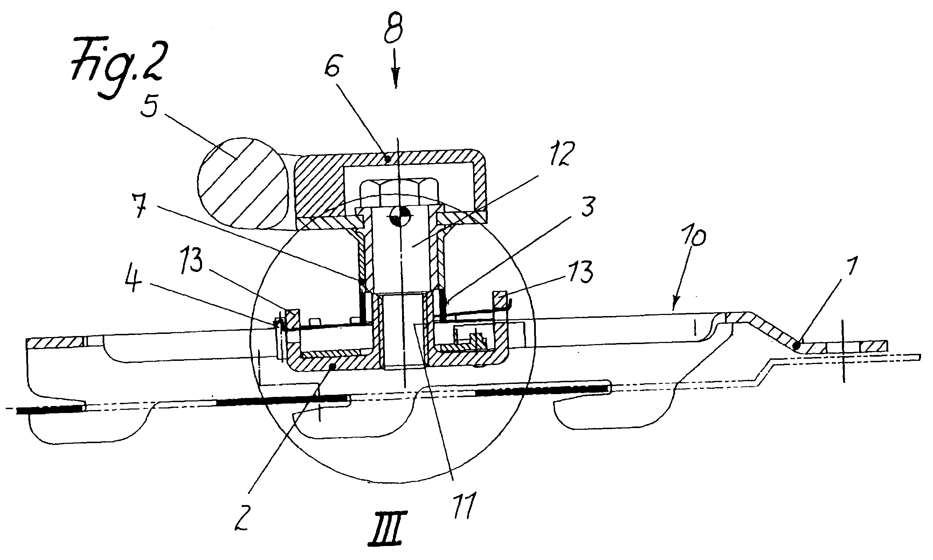

Der in der Zeichnung dargestellte höhenverstellbare Umlenkbeschlag für Sicherheitsgurte besteht aus einer Führungsschiene 1, die an einer Karosseriesäule oder dergleichen eines Kraftfahrzeuges befestigt wird. Ferner besteht er aus einem an der Schiene 1 rastend verstellbar gehalterten Verstellteil 2, welches mittels Federkraft (Feder 4) in die Rastposition gedrängt ist, wie beispielsweise in Figur 2 gezeigt ist. An dem Verstellteil 2 ist vorderseitig der Führungsschiene eine Umlenkäse 5 des Umlenkbeschlages angeordnet, die gemeinsam mit dem Verstellteil entgegen der Federkraft verstellbar ist (in der Zeichnungsfigur 2 nach unten gedrückt werden kann), so daß das Verstellteil 2 in eine entrastete Verschiebeposition verstellt ist.

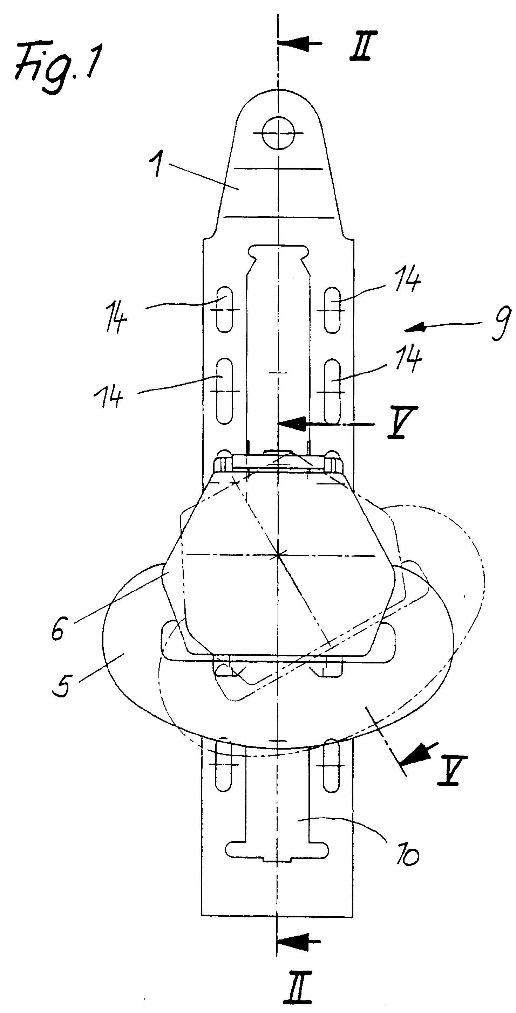

Die Umlenköse 5 ist dabei derart mit dem Verstellteil 2 gekoppelt, daß das Verstellteil in der Normalgebrauchslage der Umlenköse, wie in Figur 1 in durchgezogenen Linien gezeigt und in Figur 2 gezeigt ist, nicht durch Druckausübung in Richtung des Pfeiles 8 auf die Umlenköse normal zur Führungsschiene 1 entgegen Federkraft verstellbar ist, so daß das Verstellteil 2 nicht entrastbar ist. Lediglich bei entgegen der Fahrtrichtung (Pfeil 9 in Figur 1) des damit ausgestatteten Fahrzeuges ist es entgegen Federkraft verstellbar und entsprechend das Verstellteil 2 in die entrastete Verschiebeposition überführbar, die in Figur 6 gezeigt ist.

Das Verstellteil 2 weist eine einen Längsschlitz 10 der Führungsschiene 1 durchgreifende Führungshülse 11 auf, in die ein die Umlenköse 5 haltender Bolzen 12 eingeschraubt ist, der durch eine Kopfplatte 6 abgedeckt ist. Vorderseitig der Führungsschiene 1 ist eine formstabile Dämpferscheibe 3 angeordnet, die auf der Führungsschiene 1 aufliegt und die einen zylindrischen hülsenartigen Kragen aufweist. An diesem Kragen stützt sich in der Normalgebrauchslage eine Hülse 7 ab, die mit der Umlenköse 9 fest verbunden ist. In entgegen der Fahrtrichtung 9 gedrehter Lage der Umlenköse 5 samt Hülse 7 ist die Hülse 7 auf den Kragen der Dämpferscheibe 3 begrenzt aufschiebbar, so daß das Verstellteil somit durch Druck auf die Umlenköse in Richtung des Pfeiles 8 in die Verstellposition überführt werden kann, wie es in Figur 6 gezeigt ist.

Das Verstellteil 2 weist an seinen Längsenden in den Längsschlitz 10 der Führungsschiene 1 eingreifende Führungsvorsprünge 13 auf, wobei ein solcher Führungsvorsprung zusätzlich als Gegenlager dienen kann, so daß das Verstellteil 2 bei der Überführung in die Entrastungslage um diesen Bestandteil gekippt wird.

Seitlich neben dem Längsschlitz 10 der Führungsschiene 1 sind Rastausnehmungen 14 über die Länge der Führungsschiene 1 verteilt angeordnet, in die Rastvorsprünge des Verstellteils 2 in der Gebrauchslage eingreifen.

Der hülsenartige Kragen der Dämpferscheibe 3 und die mit der Umlenköse 5 verbundene Hülse 7 weisen nach Art von axial gerichteten Nuten und Federn ausgebildete Elemente auf, derart, daß das Ende des Kragens der Dämpferscheibe 3 an der Mündung der Hülse 7 in der Gebrauchslage abgestützt ist, während in entgegen der Fahrtrichtung um ca. 30° gedrehter Lage der Hülse 7 die Hülse 7 auf den Kragen der Dämpferscheibe 3 begrenzt aufschiebbar ist.

In der Zeichnungsfigur 4 ist die Dämpferscheibe 3 in Draufsicht gezeigt.

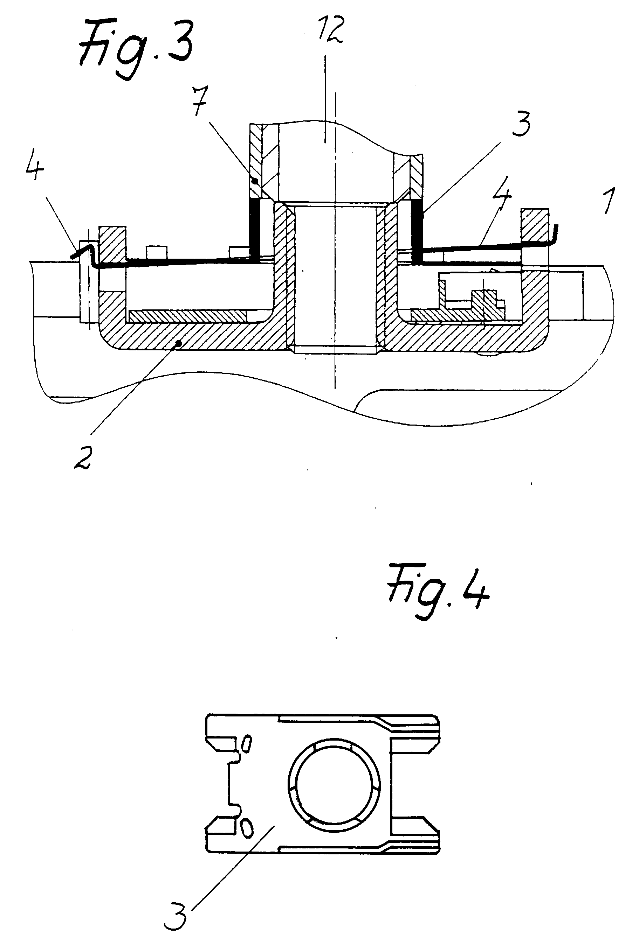

Durch diese Anordnung ist die gewünschte Funktion gewährleistet, daß nämlich dann, wenn der Umlenkbeschlag die Position gemäß Figur 1 (durchgezogene Linie) einnimmt oder die Umlenköse samt den daran befindlichen Teilen in Fahrtrichtung 9 nach vorn gedreht ist, ein Eindrücken der Umlenköse 5 samt Hülse 7 in Richtung normal zur Führungsschiene 1 nicht möglich ist, so daß demzufolge durch Druckausübung auf das Teil 6 der Umlenköse keine Entrastung des Verstellteiles 2 erfolgen kann. Lediglich dann, wenn die Umlenköse 5 samt Bestandteil 6 und Hülse 7 in die Position gedreht ist, die in Figur 1 in strichpunktierten Linien gezeigt ist und die in Figur 5 und 6 gezeigt ist, kann durch Druckausübung in Richtung des Pfeiles 8 auf das Teil 6 zur Umlenköse 5 die Hülse 7 zur Führungsschiene hin verschoben werden und auf den Kragen der Dämpferscheibe 3 aufgeschoben oder in den Kragen eingeschoben werden, so daß somit durch einen innenliegenden Teil der Hülse 7 auf den Stutzen des Verstellteiles 2 eingewirkt werden kann, der durch den Längsschlitz 10 der Führungsschiene ragt. Auf diese Weise ist eine Entriegelung in der Position gemäß Figur 5 möglich, wenn nämlich durch Druckkraftausübung in Richtung des Pfeiles 8 die Position gemäß Figur 6 erreicht ist. In Figur 3 ist der Umlenkbeschlag in der Normalposition gezeigt, in der eine Verstellung der Teile 5,6,7 relativ in der normalen Richtung zur Führungsschiene 1 nicht möglich ist.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Höhenverstellbarer Umlenkbeschlag für Sicherheitsgurte, bestehend aus einer Führungsschiene, einem an der Schiene rastend verstellbar gehalterten Verstellteil, welches mittels Federkraft in die Rastposition gedrängt ist, wobei an dem Verstellteil vorderseitig der Führungsschiene eine Umlenköse des Umlenkbeschlages angeordnet ist, die gemeinsam mit dem Verstellteil entgegen Federkraft verstellbar ist, so daß das Verstellteil in eine entrastete Verschiebeposition verstellt ist, **dadurch gekennzeichnet, daß** die Umlenköse (5) derart mit dem Verstellteil (2) gekoppelt ist, daß es in der Normalgebrauchslage der Umlenköse (5) nicht durch Druckausübung auf die Umlenköse (5) normal zur Führungsschiene (1) entgegen Federkraft verstellbar und somit das Verstellteil (2) nicht entrastbar ist und daß es nur bei entgegen der Fahrtrichtung (9) des damit ausgestatteten Fahrzeugs gegenüber dem Verstellteil (2) gedrehter Lage der Umlenköse (5) entgegen Federkraft durch Druckausübung auf die Umlenköse (5) verstellbar ist und das Verstellteil (2) in die entrastete Verschiebeposition überführbar ist.

2. Umlenkbeschlag nach Anspruch 1, **dadurch gekennzeichnet, daß** das Verstellteil (2) eine einen Längsschlitz (10) der Führungsschiene (1) durchgreifende Führungshülse (11) aufweist, in die ein die Umlenköse (5) haltender Bolzen (12) eingeschraubt ist und daß vorderseitig der Führungsschiene (1) eine Dämpferscheibe (3) angeordnet ist, die auf der Führungsschiene (1) aufliegt und die einen Kragen aufweist, an dem sich in der Normalgebrauchslage (7) eine Hülse (7) abstützt, die mit der Umlenköse (5) verbunden ist, während in der entgegen Fahrtrichtung gedrehten Lage der Umlenköse (5) samt Hülse (7) die Hülse (7) über den Kragen schiebbar ist, so daß das Verstellteil (2) entgegen Federkraft in die Verstellposition überführbar ist.

3. Umlenkbeschlag nach Anspruch 1 oder 2, **dadurch gekennzeichnet, daß** das Verstellteil (2) an seinen Längsenden in den Längsschlitz (10) der Führungsschiene (1) eingreifende Führungsvorsprünge (13) aufweist.

4. Umlenkbeschlag nach einem der Ansprüche 1 bis 3, **dadurch gekennzeichnet, daß** seitlich neben dem Längsschlitz (10) der Führungsschiene (1) Rastausnehmungen (14) über die Länge der Führungsschienen (1) verteilt angeordnet sind, in die Rastvorsprünge des Verstellteils (2) eingreifen.

5. Umlenkbeschlag nach einem der Ansprüche 1 bis 4, **dadurch gekennzeichnet, daß** der hülsenartige Kragen der Dämpferscheibe (3) und die mit der Umlenköse (5) verbundene Hülse (7) nach Art von axial gerichteten Nuten und Federn ausgebildete Elemente aufweisen, derart, daß das Ende des Kragens an der Mündung der Hülse (7) in der Gebrauchslage abgestützt ist, während in entgegen der Fahrtrichtung (9) um ca. 30° gedrehter Lage der Hülse (7) die Hülse (7) auf den Kragen aufschiebbar ist.
